# EUROPEAN PATENT SPECIFICATION

(11) **EP 3 489 372 B1**
(45) Date of publication and mention of the grant of the patent: **02.12.2020**
(21) Application number: 18214302.4
(22) Date of filing: 13.08.2014
(51) Int. Cl.: C22B 59/00, C22B 3/08, C22B 3/26

(54) **METHOD FOR PROCESS LATERITE-NICKEL ORE**
VERFAHREN ZUR VERARBEITUNG VON LATERIT-NICKELERZ
PROCÉDÉ DE TRAITEMENT DE MINERAI DE LATÉRITE-NICKEL

(30) Priority: 15.08.2013 CN 201310356929; 15.08.2013 CN 201310356852
(43) Date of publication of application: 29.05.2019
(62) Divisional of application: 14836406.0
(73) Proprietor: China Enfi Engineering Corporation, Beijing 100038 (CN)
(72) Inventor: Wang, Weiwei, Haidian, Beijing 100038 (CN); Lv, Dong, Haidian, Beijing 100038 (CN); Xu, Yuehe, Haidian, Beijing 100038 (CN); Qin, Bo, Haidian, Beijing 100038 (CN); Du, Guoshan, Haidian, Beijing 100038 (CN); Zhou, Wenlong, Haidian, Beijing 100038 (CN); Li, Shaohua, Haidian, Beijing 100038 (CN); Qiu, Shuang, Haidian, Beijing 100038 (CN)
(74) Representative: Maiwald Patent- und Rechtsanwaltsgesellschaft mbH

(56) References cited:
- EP-A1- 0 775 753
- CN-A- 102 268 552
- US-A1- 2012 204 680
- US-A1- 2012 207 656
- WEIWEI WANG ET AL: "Metallurgical processes for scandium recovery from various resources: A review", HYDROMETALLURGY, ELSEVIER SCIENTIFIC PUBLISHING CY. AMSTERDAM, NL, vol. 108, no. 1, 5 March 2011 (2011-03-05) , pages 100-108, XP028201019, ISSN: 0304-386X, DOI: 10.1016/J.HYDROMET.2011.03.001 [retrieved on 2011-03-17]

## Description

The present disclosure relates to the field of metallurgy, in particular to a method for processing a laterite-nickel ore.

### BACKGROUND

Laterite nickel ores contain a high content of nickel and cobalt. Most of raw laterite nickel ores used to produce the nickel and cobalt are imported in China, because of the low nickel and cobalt grades in original laterite nickel ores, which result in the high cost of the raw materials. In the past, the ores were mainly used for extracting nickel and cobalt metals, but other valuable metallic elements with small quantity in the ores were neglected. In this patent application, a valuable metal element scandium with a low content is found to be contained in the ores. However, the scandium extraction is difficult and its recovery ratio is low, resulting from the low content of scandium in the ores. The contents of impurities such as iron, aluminum, manganese and calcium in the ores are much higher than the content of scandium, so that the extraction of scandium is easy to be disturbed. The current scandium extracting technology has such disadvantages as long process, complex operation, low yield, high consumption of raw and auxiliary materials and high cost, so it is not industrially applicable for the extraction of scandium from the ores. Therefore, based on above findings, we finally completed the present disclosure by research on the method extracting scandium from the ores. The present disclosure has developed a new concept for the improvement of the availability of laterite nickel ores and the reduction of the cost of raw materials, and offered a new source for the extraction of scandium.

US 2012/204680 A1 discloses a method for extracting nickel values from nickel-containing ores. EP 0 775 753 A1 discloses a process for recovering scandium economically with high efficiency by concentration and separation from an oxide ore containing nickel and a small amount of scandium as well as a large amount of iron and/or aluminum.

### SUMMARY

The present disclosure aims to solve at least one of the above technical problems to some extent or to offer at least one available commercial choice. Therefore, an object of the present disclosure is to provide a method for processing a laterite-nickel ore.

The present disclosure provides a method for processing a laterite-nickel ore, including steps of:
subjecting the laterite-nickel ore to first leaching with sulfuric acid, so as to obtain a first leachate;
subjecting the first leachate to iron-aluminum (Fe-Al) precipitation and nickel-cobalt (Ni-Co) precipitation, so as to obtain a Fe-Al slag and a Ni-Co hydroxide precipitate;
recycling nickel and cobalt from the Ni-Co hydroxide precipitate;
recycling scandium from the Fe-Al slag,
wherein the step of recycling scandium from the Fe-Al slag includes:
   subjecting the Fe-Al slag to second leaching with sulfuric acid, so as to obtain a second leachate containing iron, aluminum and scandium;
   extracting scandium from the second leachate with an organic extractant, so as to obtain a scandium-containing organic phase;
   subjecting the scandium-containing organic phase to back-extraction with a monovalent acid, so as to obtain a strip liquor;
   mixing the strip liquor with a precipitant, so as to obtain a scandium-containing precipitate; and
   calcining the scandium-containing precipitate, so as to obtain scandium oxide.

According to embodiments of the present disclosure, the organic extractant is at least one selected from an organic phosphoric acid extractant, a neutral phosphorus extractant, an organic carboxylic acid extractant, an organic amine extractant and an organic chelate extractant, thereby improve efficiency of extracting scandium further.

According to embodiments of the present disclosure, the organic phosphoric acid extractant is at least one of bis(2-ethylhexyl) phosphoric acid (P204) and bis(2,4,4-trimethyl pentyl) phosphinic acid (Cyanex272); the neutral phosphorus extractant is tributyl phosphate (TBP); the organic carboxylic acid extractant is at least one selected from naphthenic acid or 2-octylphenoxy acetic acid (CA12); the organic amine extractant is 3-octyl tertiary amine (N235); and the organic chelate extractant is N,N-bis(1-heptyl methyl) acetamide (N503), thereby improve efficiency of extracting scandium further.

According embodiments of the present disclosure, the monovalent acid is hydrochloric acid or nitric acid.

According to embodiments of the present disclosure, the monovalent acid is of a concentration of 0.01mol/L to 5 mol/L, thereby improve efficiency of extracting scandium further.

According to embodiments of the present disclosure, the precipitant is at least one selected from sodium hydroxide, ammonium hydroxide, sodium carbonate, sodium bicarbonate and oxalic acid, thereby improve efficiency of extracting scandium further.

According to embodiments of the present disclosure, the precipitant is of a concentration of 0.1 mol/L to 5 mol/L, thereby improve efficiency of extracting scandium further.

According to embodiments of the present disclosure, the scandium-containing precipitate is calcined for 1 h to 6 h at a temperature of 700 degrees Celsius to 900 degrees Celsius, thereby enhance yield of scandium oxide further.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig.1 is a flow chart showing a method for processing alaterite-nickel ore according to an embodiment of the present disclosure; and
Fig.2 is a flow chart showing a method for recycling scandium.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In addition, terms such as "first" and "second" are used herein for purposes of description and are not intended to indicate or imply relative importance or significance or impliedly indicate quantity of the technical feature referred to. Thus, the feature defined with "first" and "second" may comprise one or more this feature. In the description of the present disclosure, "a plurality of' means two or more than two this features, unless specified otherwise.

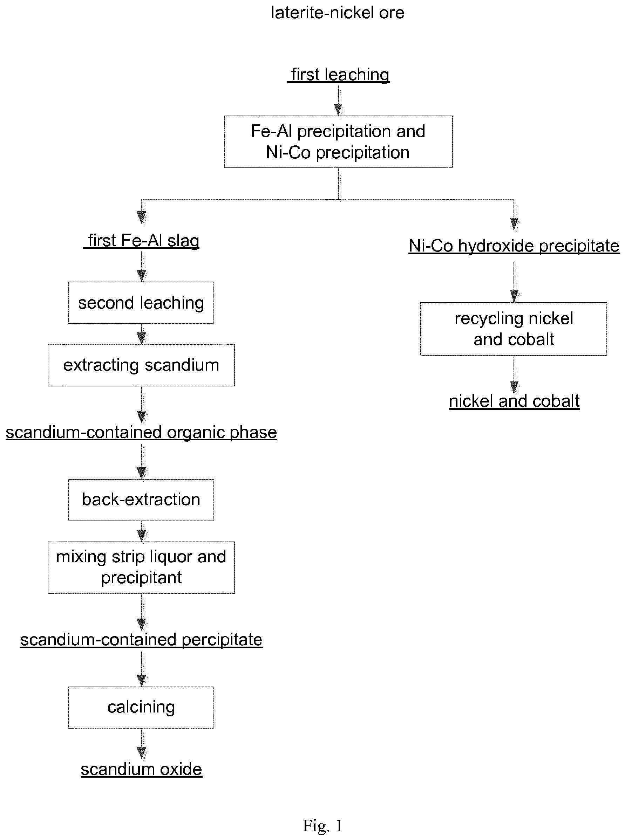

In an aspect, the present disclosure provides in embodiments a method for processing a latcritc-nickcl ore. Referring to Fig.1, such method is dcscribcd in details below.

According to embodiments of the present disclosure, the method for processing the laterite-nickel ore includes steps of:
subjecting the laterite-nickel ore to first leaching with sulfuric acid, so as to obtain a first leachate;
subjecting the first leachate to first iron-aluminum (Fe-Al) precipitation and nickel-cobalt (Ni-Co) precipitation, so as to obtain a first Fe-Al slag and a Ni-Co hydroxide precipitate, respectively;
recycling nickel and cobalt from the Ni-Co hydroxide precipitate;
recycling scandium from the first Fe-Al slag,
wherein the step of recycling scandium from the first Fe-Al slag includes:
   subjecting the first Fe-Al slag to second leaching with sulfuric acid, so as to obtain a second leachate containing iron, aluminum and scandium;
   extracting scandium from the second leachate with a first organic extractant, so as to obtain a first scandium-containing organic phase;
   subjecting the first scandium-containing organic phase to first back-extraction with a monovalent acid solution, so as to obtain a first strip liquor;
   mixing the first strip liquor with a first precipitant, so as to obtain a first scandium-containing precipitate; and
   calcining the first scandium-containing precipitate, so as to obtain scandium oxide.

It may extract a large amount of nickel and cobalt and a small amount of scandium from the laterite-nickel ore by the method for processing the laterite-nickel ore according to embodiments of the present disclosure, so as to obtain nickel, cobalt and scandium, in particular, to effectively extract scandium therefrom. To further improve efficiency of extracting the small amount of scandium from the laterite-nickel ore, the inventor provides a method for processing the laterite-nickel ore, including steps of: subjecting the laterite-nickel ore to leaching for several times followed by the Fe-Al precipitation and the scandium extraction, so as to obtain the Fe-Al slag and the scandium-containing organic phase, respectively; and extracting scandium from the Fe-Al slag and the scandium-containing organic phase, thereby to effectively improve the efficiency of extracting scandium.

According to examples of the present disclosure, in the aforementioned method, the laterite-nickel ore is subjected to first leaching with a sulfuric acid under a high pressure, so that most valuable metals including scandium, nickel and cobalt arc dissolved in an acidic leachate under the high pressure; and most iron remains in a stable form of hematite and exists in leaching tailings, so that most iron may be separated and removed as an impurity. The acidic leachate under the high pressure is of an iron content lower than 1g/L. Therefore, most Fe-Al slags are separated and removed from the laterite-nickel ore after the first acidic leaching under the high pressure.

Further, the first leachate is subjected to the iron-aluminum (Fe-Al) precipitation and the nickel-cobalt (Ni-Co) precipitation. In specific, the first leachate is added with an alkali solution (eg., solutions of sodium hydroxide, potassium hydroxide, calcium hydroxide, ammonium hydroxide, sodium carbonate, sodium bicarbonate and calcium carbonate) to be of a pH value of 3.0 to 5.5, thereby to obtain the first Fe-Al slag which is filtered out thereafter. Therefore, most Fe-Al impurities are separated and removed from the laterite-nickel ore as impurities through the acidic leaching and the Fe-Al precipitation.

Further, a post- Fe-Al-precipitated solution is subjected to the Ni-Co hydroxide precipitation. In particular, the post-Fe-Al-precipitated solution is added with the alkali solution (eg., solutions of sodium hydroxide, potassium hydroxide, calcium hydroxide, ammonium hydroxide, sodium carbonate, sodium bicarbonate and calcium carbonate) to be of a pH value of 7.0 to 7.9, so as to obtain a precipitant of Ni-Co hydroxide after filtered. The Ni-Co hydroxide precipitate is of a scandium content of 0.01% to 5%, thereby to enrich scandium.

According to examples of the present disclosure, the step of recycling nickel and cobalt from the Ni-Co hydroxide precipitate may also include extracting scandium from the Ni-Co hydroxide precipitate.

### S100: extracting scandium from the Ni-Co hydroxide precipitate

According to an example of the present disclosure, the Ni-Co precipitate is obtained by subjecting the laterite-nickel ore to the first leaching. According to an example of the present disclosure, scandium is further extracted from the Ni-Co hydroxide precipitate.

According to an example of the present disclosure, the Ni-Co hydroxide precipitate is subjected to third leaching, so as to obtain third leachate containing Ni and Co; then scandium is extracted from the third leachate containing Ni and Co with a second organic extractant, so as to obtain a Ni-Co-contained solution and a second scandium-containing organic phase; nickel and cobalt are recycled from the Ni-Co-contained solution; and scandium is recycled from the second scandium-containing organic phase.

According to examples of the present disclosure, the second organic extrantant is not restricted in any type, according to a specific example, the second organic extrantant may be at least one selected from organic phosphoric extractant, neutral phosphorus extractant, organic carboxylic extractant, organic amine extractant and organic chelate extractant, thereby improve the efficiency of extracting scandium further. It has been found by the inventor through repeated experiments that all of bis-(2-ethylhexyl) phosphoric acid (P204) and bis-(2,4,4-trimethyl pentyl) phosphinic acid (Cyanex272) in the organic phosphoric extractant; tributyl phosphate (TBP) in the neutral phosphorus extractant; naphthenic acid or 2-octylphenoxy acetic acid (CA12) in the organic carboxylic extractant; 3-octyl tertiary amine (N235) in the organic amine extractant and N503 (N,N-bis(1- heptyl methyl) acetamide) in the organic chelate extractant are in favor of extracting scandium. According to examples of the present disclosure, the bis-(2-ethylhexyl) phosphoric acid (P204) shows a better effect in extracting scandium, as comparing with (2-ethylhexyl)-2- ethylhexyl phosphate (P507), an extractant in the same category.

According to an example of the present disclosure, as shown in Fig.1, scandium may be recycled from the second scandium-containing organic phase by the following steps: subjecting second the scandium-containing organic phase to a second back-extraction with a hydrochloric acid, so as to obtain a second strip liquor; mixing the second strip liquor with a second precipitant to obtain second scandium-containing precipitate, respectively; calcining the second scandium-containing precipitate, so as to obtain scandium oxide, thereby to effectively extract scandium form the second scandium-containing organic phase. According to examples of the present disclosure, the hydrochloric acid is of a concentration not specially restricted; according an example of the present disclosure, the hydrochloric acid is be of a concentration of 0.01 mol/L to 5 mol/L. Meanwhile, it may be controlled that 1 L to 10 L of the hydrochloric acid being of a concentration of 1 mol/L is added into 1 L of the second scandium-containing organic phase, so that the efficiency of extracting scandium may be further improved.

According to examples of the present disclosure, the second strip liquor may be precipitated by a second precipitant. According to examples of the present disclosure, the second precipitant is at least one selected from sodium hydroxide, ammonium hydroxide, sodium carbonate, sodium bicarbonate and oxalic acid, so that the efficiency of precipitating may be further improved.

According to an example of the present disclosure, the second strip liquor is precipitated by an oxalic acid to obtain second scandium-containing precipitate. The oxalic acid is of a concentration not restricted. Specially, according to examples of the present disclosure, the second strip liquor is precipitated by the oxalic acid being of a concentration of 0.1 mol/L to 5 mol/L, and of a volume which may be adjusted in light of the used concentration accordingly. For example, 1.5L of the oxalic acid being of a concentration of 2 mol/L is added into 1 L of the second strip liquor, so that the efficiency of extracting scandium may be further improved. According to examples of the present disclosure, the second scandium-containing precipitate may be further calcined to obtain scandium oxide, so as to effectively remove other impurities in the second scandium-containing precipitate, thereby to further improve purity of obtained scandium.

### S200: recycling nickel and cobalt from the third leachate containing nickel and cobalt

According to an example of the present disclosure, a solution containing nickel and cobalt is obtained from the nickel-cobalt (Ni-Co) precipitation, and then nickel and cobalt are recycled from the solution containing nickel and cobalt by the following steps: subjecting the solution containing nickel and cobalt to second iron-aluminum (Fe-Al) precipitation, so as to obtain a second Fe-Al slag and purified solution containing nickel and cobalt; and refining the purified solution containing nickel and cobalt by hydrometallurgical procedures, so as to recycle nickel and cobalt, thereby to effectively extract nickel and cobalt from the laterite-nickel ore.

According to examples of the present disclosure, for the method according to embodiments of the present disclosure, iron and aluminum are precipitated for several times: the first leachate is subjected to the first iron-aluminum (Fe-Al) precipitation, to obtain the first Fe-Al slag; and the solution containing nickel and cobalt is subjected to the second iron-aluminum (Fe-Al) precipitation, to obtain the second Fe-Al slag, so that a large amount of Fe-Al slag is obtained by the method for processing the laterite nickel ore.

### S300: recycling scandium from the Fe-Al slag

According to examples of the present disclosure, the method further includes recycling scandium from the Fe-Al slag. Such Fe-Al slag may be the first Fe-Al slag separated from the laterite-nickel ore, or the second Fe-Al slag precipitated from the solution containing nickel and cobalt. As shown in Fig. 1, according to examples of the present disclosure, the step of recycling scandium from the first Fe-Al slag may include a step of: subjecting the first Fe-Al slag to second leaching with a sulfuric acid, to obtain a second leachate containing iron, aluminum and scandium; extracting scandium from the second leachate with a first organic extractant, so as to obtain a first scandium-containing organic phase. According to examples of the present disclosure, the first organic extractant may be same as the second organic extractant used in extracting scandium from the third leachate containing Ni and Co. According to examples of the present disclosure, the first organic extractant is not specially restricted in any type, according to an example of the present disclosure, the first organic extractant may be at least one selected from organic phosphoric acid extractant (such as bis-(2-ethylhexyl) phosphoric acid (P204), (2-ethylhexyl)-2-ethylhexyl phosphonic acid (P507) and bis-(2,4,4-trimethyl pentyl) phosphinic acid (Cyanex272), neutral phosphorus extractant (tributyl phosphate (TBP)), organic carboxylic acid extractant (such as naphthenic acid or 2-octylphenoxy acetic acid (CA12)), organic amine extractant (such as 3-octyl tertiary amine (N235)) and organic chelate extractant (such as N,N 2-(1- heptyl methyl) acetamide) (N503), thereby improve the efficiency of extracting scandium further.

According to examples of the present disclosure, the first scandium-containing organic phase is subjected to a first back-extraction with a hydrochloric acid, so as to obtain a first strip liquor. According to examples of the present disclosure, the hydrochloric acid is of a concentration not specially restricted, according to an example of the present disclosure; the hydrochloric acid is of the concentration of 0.01 mol/L to 5 mol/L. Meanwhile, it may be controlled that 1 L to 10 L of the hydrochloric acid being of a concentration of 1 mol/L is added into 1 L of the first scandium-containing organic phase, so that the efficiency of extracting scandium may be further improved. According to examples of the present disclosure, the first strip liquor is further precipitated with an oxalic acid, so as to obtain the precipitate containing scandium. The oxalic acid is of a concentration not specially restricted, according to examples of the present disclosure; the strip liquor is precipitated by the oxalic acid being of a concentration of 0.1 mol/L to 5 mol/L, and of a volume which may be adjusted in light of the used concentration accordingly. For example, 1.5 L of the oxalic acid being of a concentration of 2 mol/L is added into 1 L of the strip liquor, so that the efficiency of extracting scandium may be further improved.

According to an example of the present disclosure, the scandium-containing precipitate is further calcined to obtain scandium oxide, thereby to effectively remove other impurities from the precipitate and further improve purity of the scandium product. According to examples of the present disclosure, the calcining step is controlled by adjusting temperature and duration. According to examples of the present disclosure, in light of physical and chemical properties of scandium, the scandium-containing precipitate is calcined for 1 h to 6 h at a temperature of 700 degrees Celsius to 900 degrees Celsius, so as to remove other impurities from the precipitate to the maximum extent, thereby to further improve the purity of scandium oxide.

According to examples of the present disclosure, the method further include a step of pulping prior to the step of third leaching, in specific, prior to the step of third leaching with the sulfuric acid, the Ni-Co hydroxide precipitate is subjected to pulping, so as to obtain a Ni-Co hydroxide pulp and subject the Ni-Co hydroxide pulp to the third lcaching, thereby to be in favor of leach metals from the Ni-Co hydroxide precipitate with the sulfuric acid, and further improve the efficiency of the third leaching step and the recycling efficiencies of nickel, cobalt and scandium.

According to examples of the present disclosure, the Ni-Co hydroxide pulp is of a solid-to-liquid ratio of (1:20) to (1:1), thereby improve the efficiency of leaching step and increase efficiencies of nickel, cobalt and scandium further.

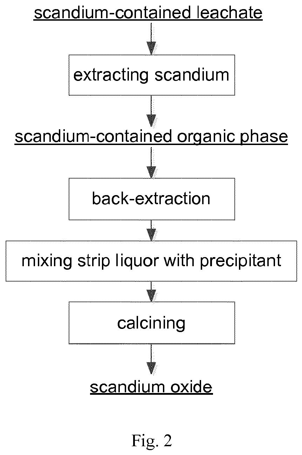

The present disclosure also provides a method for recycling scandium. Such method is described in details below referring to Fig.2. The method includes steps of:
extracting scandium from scandium-containing leachate with an organic extractant, so as to obtain a scandium-containing organic phase;
subjecting the scandium-containing organic phase to back-extraction with a monovalent acid, so as to obtain a strip liquor;
mixing the strip liquor with a precipitant, so as to obtain a scandium-containing precipitate; and
calcining the scandium-containing precipitate, so as to obtain scandium oxide.

Thus, scandium may be extracted from the scandium-containing solution in effective and selective manners through the method according to embodiments of the present disclosure, which is of a high selection and recycling rate.

For the first step, according to examples of the present disclosure, scandium is extracted from scandium-containing leachate with an organic extractant, so as to obtain a scandium-containing organic phase. According to an example of the present disclosure, the organic extractant is not restricted especially in any type. According to exmaples of the present disclosure, the organic extractant may be at least one selected from organic phosphoric acid extractant, neutral phosphorus extractant, organic carboxylic acid extractant, organic amine extractant and organic chelate extractant, thereby improve the efficiency of extracting scandium further. It has been found by the inventor through repeated experiments that all of bis-(2-ethylhexyl) phosphoric acid (P204) and bis-(2,4,4-trimethyl pentyl) phosphinic acid (Cyanex272) in the organic phosphoric acid extractant; tributyl phosphate (TBP) in the neutral phosphorus extractant; naphthenic acid or 2-octylphenoxy acetic acid (CA12) in the organic carboxylic acid extractant; 3-octyl tertiary amine (N235) in the organic amine extractant and N503 (N,N-bis(1- heptyl methyl) acetamide) in the organic chelate extractant are in favor of extracting scandium. According to examples of the present disclosure, the bis-(2-ethylhexyl) phosphoric acid (P204) shows a better effect in extracting scandium, as comparing with (2-ethylhexyl)-2- ethylhexyl phosphate (P507), an extractant in the same category.

For the follow-up steps, according to examples of the present disclosure, the scandium-containing organic phase is subjected to back-extraction with a monovalent acid, so as to obtain a strip liquor; mixing the strip liquor with a precipitant, so as to obtain a scandium-containing precipitate; and calcining the scandium-containing precipitate, so as to obtain scandium oxide, thereby to effectively extract scandium from the scandium-containing organic phase. According to examples of the present disclosure, the monovalent acid may be a hydrochloric acid or nitric acid. According to an example of the present disclosure, the monovalent acid is of a concentration not restricted specially According to examples of the present disclosure; the monovalent acid is of the concentration of 0.01mol/L to 5 mol/L. Meanwhile, it may be controlled that 1 L to 10 L of the hydrochloric acid being of a concentration of 1 mol/L is added into 1 L of the first or second scandium-containing organic phase, so that the efficiency of extracting scandium may be further improved. According to examples of the present disclosure, the strip liquor is precipitated using a precipitant, according to an example of the present disclosure, the precipitant is at least one selected from sodium hydroxide, ammonium hydroxide, sodium carbonate, sodium bicarbonate and oxalic acid, thereby improve precipitation efficiency further. According to an example of the present disclosure, the strip liquor is precipitated with an oxalic acid, so as obtain the scandium-containing precipitate. The oxalic acid is of a concentration not restricted specially, according to examples of the present disclosure, the first or second strip liquor is precipitated by the oxalic acid being of a concentration of 0.1 mol/L to 5 mol/L, and of a volume which may be adjusted in light of the used concentration accordingly. For example, 1.5L of the oxalic acid being of a concentration of 2 mol/L is added into 1 L of the first or second strip liquor, so that the efficiency of extracting scandium may be further improved. According to examples of the present disclosure, the first or second scandium-containing precipitate may be further calcined to obtain scandium oxide, so as to effectively remove other impurities in the first or second scandium-containing precipitate, thereby to further improve purity of obtained scandium.

According to examples of the present disclosure, the scandium-containing precipitate is further calcined, so as to obtain scandium oxide, thereby to effectively remove other impurities from the precipitate and further improve purity of the scandium product. According to examples of the present disclosure, the calcining step is controlled by adjusting temperature and duration. According to examples of the present disclosure, in light of physical and chemical properties of scandium, the scandium-containing precipitate is calcined for 1 h to 6 h at a temperature of 700 degrees Celsius to 900 degrees Celsius, so as to remove other impurities from the precipitate to the maximum extent, thereby to further improve the purity of scandium oxide.

According to an example of the present disclosure, the scandium-containing leachate is obtained by a step of: subjecting a laterite-nickel ore to first leaching, so as to obtain leachate containing scandium, so that scandium is extracted from the laterite-nickel ore effectively, thereby availability of the laterite-nickel ore is increased. According to examples of the present disclosure, the step of recycling scandium from the first leachate has advantages such as being of a simple process, enabling the whole production system to be simple, and being easy to control the recycling ratio.

According to an example of the present disclosure, the scandium-containing leachate is obtained by steps of: subjecting a laterite-nickel ore to first leaching, so as to obtain first leachate; subjecting the first leachate to first iron-aluminum (Fe-Al) precipitation, so as to obtain a first Fe-Al slag and a first post-Fe-Al-precipitated solution; subjecting the first post-Fe-Al-precipitated solution to nickel-cobalt (Ni-Co) precipitation, so as to obtain a Ni-Co hydroxide precipitate; and subjecting the Ni-Co hydroxide precipitate to third leaching, so as to obtain leachate containing scandium. In such method according to the present example, because scandium is of a low concentration in the first post-Fe-Al-precipitated solution as compared to that of nickel and cobalt, then it is difficult to precipitate scandium therefrom individually. However, effect of precipitating scandium may be improved through co-precipitating scandium with nickel and cobalt, so that it may reduce individual operation of filtering the scandium-containing precipitate, increase efficiency of recycling nickel and cobalt, reduce consumption of the precipitant and save operating cost, as compared with precipitating nickel, cobalt and scandium, respectively. Therefore, it may enrich most scandium into the Ni-Co hydroxide precipitate selectively, i.e., enrich scandium into part of precipitants in advance, so as to save extractant and stripping agents during recycling step significantly, thereby to reduce operating cost.

According to an example of the present disclosure, the scandium-containing leachate is obtained by steps of: subjecting the first Fe-Al slag (obtained in the previous example) to second leaching, so as to obtain leachate containing scandium. In such method according to the present example, because scandium is of a low concentration in the first leachate as compared to that of iron and aluminum, then it is difficult to precipitate scandium therefrom individually. However, effect of precipitating scandium may be improved through co-precipitating scandium with iron and aluminum, so that all of scandium, iron and aluminum arc enriched into the prccipitatc, which may remove scandium, iron and aluminum from the first leachate simultaneously and purify the first leachate (in the view of recycling nickel and cobalt), thereby to simplify a process for purifying a solution. It may further purify the first post-Fe-Al-precipitated solution and recycle scandium from the second leachate. According to the present example of the present disclosure, scandium is selectively enriched into the first Fe-Al slag through the step of subjecting the first leachate to first iron-aluminum (Fe-Al) precipitation. According to the present example, the first Fe-Al slag is subjected to second leaching, so as to obtain leachate containing scandium; and scandium is recycled from the leachate containing scandium, so that it may significantly save the extractant and the stripping agent consumed for recycling scandium, thereby the operating cost is reduced.

According to an example of the present disclosure, the scandium-containing leachate is obtained by steps of: subjecting a laterite-nickel ore to first leaching, so as to obtain first leachate; subjecting the first leachate to first iron-aluminum (Fe-Al) precipitation and nickel-cobalt (Ni-Co) precipitation, so as to obtain a first Fe-Al slag and Ni-Co hydroxide precipitate; and subjecting the first Fe-Al slag and the Ni-Co hydroxide precipitate to fourth leaching, so as to obtain leachate containing scandium. In the present example, it may enrich most scandium into precipitates, thereby to decrease an amount of acid solution used in the fourth leaching, so that scandium is of a high content in the precipitates and a low content in the leachate containing scandium, which may reduce consumption of the extractant and the stripping agent for recycling scandium, thereby the operating cost is reduced. In addition, as scandium is recycled from both the Fe-Al slag and the Ni-Co hydroxide prepitate, the efficiency of recycling scandium is improved.

According to an example of the present disclosure, the scandium-containing leachate is obtained by steps of: subjecting a laterite-nickel ore to first leaching, so as to obtain first leachate; subjecting the first leachate to first iron-aluminum (Fe-Al) precipitation, so as to obtain a first Fe-Al slag and a first post-Fe-Al-precipitated solution; subjecting the first post-Fe-Al-precipitated solution to nickel-cobalt (Ni-Co) precipitation, so as to obtain a Ni-Co hydroxide precipitate; subjecting the Ni-Co hydroxide precipitate to third leaching, so as to obtain leachate containing nickel and cobalt; subjecting the leachate containing nickel and cobalt to second iron-aluminum (Fe-Al) precipitation, so as to obtain a second Fe-Al slag; and subjecting the second Fe-Al slag to fifth leaching, so as to obtain leachate containing scandium. In the present example, the Ni-Co hydroxide precipitate is subjected to third leaching and the second iron-aluminum (Fe-Al) precipitation, thereby to further improve the purity of the Ni-Co product. In addition, scandium is also recycled from the second Fc-Al slag, thereby the efficiency of recycling scandium is improved further.

According to an example of the present disclosure, the scandium-containing is obtained by steps of: leachate subjecting a laterite-nickel ore to first leaching, so as to obtain first leachate; subjecting the first leachate to first iron-aluminum (Fe-Al) precipitation, so as to obtain a first Fe-Al slag and a first post-Fe-Al-precipitated solution; subjecting the first post-Fe-Al-precipitated solution to a nickel-cobalt (Ni-Co) precipitation, so as to obtain a Ni-Co hydroxide precipitate; subjecting the Ni-Co hydroxide precipitate to third leaching, so as to obtain leachate containing nickel and cobalt; subjecting the leachate containing nickel and cobalt to second iron-aluminum (Fe-Al) precipitation, so as to obtain a second Fe-Al slag; and subjecting the first and second Fe-Al slags to sixth leaching, so as to obtain leachate containing scandium. In the present example, the iron-aluminum (Fe-Al) precipitation is conducted with the first leachate and the leachate containing nickel and cobalt, respectively, so that the purity of the Ni-Co product may be improved further. Besides, both the first and second Fe-Al slag are recycled, so as to improve the efficiency of recycling scandium further.

The method for recycling scandium according to the above examples of the present disclosure may effectively recycle scandium from the laterite-nickel ore through a plurality of leaching, thereby to enrich scandium from the laterite-nickel ore to different extents, and improve the efficiency of recycling scandium.

The present disclosure will be described in details below in conjunction with specific examples. It would be appreciated that these examples are merely for description, but not intended to limit the present disclosure in any way.

### Example 1

A laterite-nickel ore is of a composition shown as Table 1, in which scandium is of a content of 0.0033%.

**Table 1 Contents of elements in the laterite-nickel ore and their concentrations in the acidic leachate under the high pressure**

| Elements | Contents in the laterite-nickel ore (%) | Concentrations in acidic leachate (g/L) |
|---|---|---|
| Ni | 1.07 | 3.85 |
| Co | 0.1 | 0.32 |
| Cu | <0.02 | 0.01 |
| Fe | 41.9 | 1.32 |
| Mn | 0.653 | 2.05 |
| Zn | 〈0.05 | 0.11 |
| Pb | 〈0.02 | <0.001 |
| Si | 7.15 | 0.094 |
| Al | 1.83 | 1.69 |
| Ca | 0.157 | 0.14 |
| Mg | 1.98 | 3.59 |
| Cr | 0.5 | 0.022 |
| Sc | 0.0033 | 0.0117 |

The laterite-nickel ore was subjected to leaching with a sulfuric acid in an autoclave at a temperature of 255 degrees Celsius and a pressure of 5 Mp. A Most valuable metals such as scandium (0.0117g/L), nickel (3.85 g/L) and cobalt (0.32 g/L) were dissolved into an acidic leachate under the high pressure; however, most iron (∼97%) remained in a stable form of hematite and existed in leaching tailings, so that most iron were separated and removed. The acidic leachate under the high pressure was of an iron content of 0.93 g/L.

The acidic leachate was adjusted to be of a pH value of 4.0 by adding sodium hydroxide at a temperature of 70 degrees Celsius, to obtain a Fe-Al slag which was filtered out thereafter, so that most Fe-Al impurities were separated and removed. Further, a post-Fe-Al-precipitated solution was added with the alkali solution to be of a pH value of 7.5, so as to obtain a precipitant of Ni-Co hydroxide after filtered. The Ni-Co hydroxide precipitate was of a scandium content of 0.075%, 22.7 times of that in the laterite-nickel ore, so that scandium was concentrated.

**Table 2 Contents of main elements in the Ni-Co hydroxide precipitate**

| Contents of main elements in the Ni-Co hydroxide precipitate (%) | | | | | | | | |
|---|---|---|---|---|---|---|---|---|
| Sc | Ni | Co | Fe | Mn | Al | Ca | Mg | Cr |
| 0.075 | 41.1 | 4.2 | 0.407 | 7.2 | 0.11 | 0.543 | 0.513 | <0.005 |

The above Ni-Co hydroxide precipitate was added with a 20% (mass ratio) sulfuric acid at a solid-to-liquid ratio (S:L) of 1:10, so as to obtain third leachate after stirring, reacting, third leaching and filtering. The third leachate included Ni, Co, Mn, Ca, Mg, Sc, Fe and Al.

The above third leachate containing Ni, Co, Mn, Ca, Mg, Sc, Fe and Al was adjusted to be of a pH value of 0.2, and then added with 10% Cyanex72 (a sulfonated kerosene solution) at an aqueous phase/organic phase ratio of 10:1. Scandium was of an extraction percentage of 99.9%, Ni, Co, Fe and Al were of extraction percentages of 0.05%, 0.1%, 0.3% and 0%, respectively. Thus, impurities were separated from scandium due to their low extraction percentages. A small amount of Fe, Ni and Co extracted were washed off from the loaded organic phase, while Sc was reserved in the organic phase by means of performing 2-stage washing with 10% sulfuric acid at an aqueous phase/organic phase ratio of 2:1. Therefore, scandium was separated from impurities and enriched into the organic phase. A strip liquor containing scandium was obtained by adding 0.5M HCl into the scandium-containing organic phase after purified at an aqueous phase/organic phase ratio of 1:5 for 5-stage back-extraction.

The strip liquor containing scandium was added with 2 mol/L of oxalic acid to precipitate scandium as scandium oxalate. The precipitate was calcined for 2 hours at a temperature of 800 degrees Celsius after filtered, thereby scandium oxide with a purity of 99.9% was obtained.

Raffinate obtained after the step of extracting scandium was a purified solution containing nickel and cobalt without scandium, which can be used for producing metals of nickel and cobalt by extraction and separation with a solvent, electrolysis or other refining method.

### Example 2

The Ni-Co hydroxide precipitate, of which contents of main elements are listed in Table 2, was subjected to third leaching by adding 20% (mass ratio) sulfuric acid solution therein at a solid-to-liquid ratio (S: L) of 1: 5, so as to third leachate after stirring, reacting, leaching. The third leachate mainly contained Ni, Co, Mn, Sc, Fe, Al and Ca.

The above third leachate containing Ni, Co, Mn, Ca, Mg, Sc, Fe and Al was adjusted to be of a pH value of 0.5, and then added with a kerosene solution containing 10% of N235 (3-octyl tertiary amine) and 5% of N503 (N,N 2-(1- heptyl methyl) acetamide) at an aqueous phase/organic phase ratio of 5:1. Scandium was of an extraction percentage of 99.8%, Ni, Co, Fe and Al were of extraction percentages of 0.1%, 0.2%, 1.0% and 0.2%, respectively. Thus, impurities were separated from scandium due to their low extraction percentages. A small amount of Fe, Ni and Co extracted were washed off from the loaded organic phase, while Sc was reserved in the organic phase by means of performing 4-stage washing with 5% sulfuric acid at an aqueous phase/organic phase ratio of 2:1. Therefore, scandium was separated from impurities and enriched into the organic phase. A strip liquor containing scandium was obtained by adding 0.2M HCl into the scandium-containing organic phase after purified at an aqueous phase/organic phase ratio of 1:1 for 2-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered, thereby scandium oxide with a purity of 99.9% was obtained.

Raffinate obtained after the step of extracting scandium was a purified solution containing nickel and cobalt without scandium, which can be used for producing metals of nickel and cobalt by extraction and separation with a solvent, electrolysis or other refining method.

### Example 3

The first leachate, of which contents of main elements are listed in Table 1, was adjusted to be of a pH value of 3.8 with an alkali solution, so as to obtain the Fe-Al slag from the first leachate, thereby to separate scandium from purities such as Fe and Al. A post-Fe-Al-precipitated solution was then adjusted to be of a pH value of 8.0, so as to precipitate nickel and cobalt as the Ni-Co hydroxide precipitate. Scandium was enriched along with the precipitation of the Ni-Co hydroxide precipitate. The Ni-Co hydroxide precipitate was of a scandium content of 0.139%.The contents of elements in the Ni-Co precipitation are listed in Table 3.

**Table 3 Contents of main elements in the Ni-Co hydroxide precipitation**

| Contents of main elements in the Ni-Co hydroxide precipitation (%) | | | | | | | |
|---|---|---|---|---|---|---|---|
| Sc | Ni | Co | Fe | Mn | Al | Ca | Cr |
| 0.139 | 42.1 | 3.45 | 0.17 | 6.9 | 0.058 | 0.11 | <0.005 |

The above Ni-Co hydroxide precipitate was added with a 20% (mass ratio) sulfuric acid at a solid-to-liquid ratio (S:L) of 1:5, so as to obtain third leachate after stirring, reacting, third leaching and filtering. The third leachate mainly included Ni, Co, Mn, Ca, Mg, Sc, Fe and Al.

The above third leachate containing Ni, Co, Mn, Ca, Mg, Sc, Fe and Al was adjusted to be of a pH value of 0.5, and then added with a kerosene solution containing 15% of P204 (bis-(2-ethylhexyl) phosphoric acid) and 5% of TBP (tributyl phosphate) at an aqueous phase/organic phase ratio of 5:1. Scandium was of an extraction percentage of 99.8%, Ni, Co, Fe and Al were of extraction percentages of 0.1%, 0.2%, 0.1% and 0%, respectively. Thus, impurities were separated from scandium due to their low extraction percentages. A small amount of Fe, Ni and Co extracted were washed off from the loaded organic phase, while Sc was reserved in the organic phase by means of performing 4-stage washing with 5% sulfuric acid at an aqueous phase/organic phase ratio of 2:1. Therefore, scandium was separated from impurities and enriched into the organic phase. A strip liquor containing scandium was obtained by adding 2M HCl into the scandium-containing organic phase after purified at an aqueous phase/organic phase ratio of 1:10 for 10-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered, thereby scandium oxide with a purity of 99.9% was obtained.

### Example 4

The first leachate, of which contents of main elements are listed in Table 1, was adjusted to be of a pH value of 4.5 with Ca(OH)₂ at a temperature of 70 degrees Celsius, so as to obtain the first Fe-Al slag from the first leachate. Along with the co-precipitation of Al and Fe, the first Fe-Al slag was of a scandium content of 0.032%. Scandium was enriched as about ten times as compared with that in the laterite-nickel ore, and separated from nickel and cobalt simultaneously.

Raffinate obtained after the step of extracting scandium was a purified solution containing nickel and cobalt without scandium, which can be used for producing metals of nickel and cobalt by extraction and separation with a solvent, electrolysis or other refining method.

**Table 4 Contents of main elements in the first Fe-Al slag**

| Contents of main elements in the first Fe-Al slag (%) | | | | | | | | | | |
|---|---|---|---|---|---|---|---|---|---|---|
| Ni | Co | Al | Cr | Cu | Fe | Mg | Mn | Sc | Zn | Si |
| 0.416 | 0.041 | 2.536 | 0.049 | 0.03 | 8.919 | 0.01 | 0.247 | 0.032 | 0.05 | 3.6 |

The Fe-Al slag, of which contents of main elements are listed in Table 4, was subjected to second leaching with 2 mol/L sulfuric acid at a solid-to-liquid ratio (S: L) of 1:10, so as to obtain a second leachate after mixing, stirring and filtering. The second leachate mainly included iron, aluminum, and a small amount of Sc, Ni, Ca and Mn. Analysis data for the second leachate is shown in Table 5.

**Table 5 Concentrations of elements in the second leachate**

| Concentrations of elements in the second leachate (g/L) | | | | | |
|---|---|---|---|---|---|
| Al | Ca | Fe | Mn | Ni | Sc |
| 5.269 | 0.699 | 8.262 | 0.0416 | 0.657 | 0.0344 |

The second leachate was extracted with 5% Cyanex272 (bis-(2,4,4-trimethyl pentyl) phosphinic acid) + 1% TBP (tributyl phosphate) as the organic phase, at an aqueous phase/organic phase ratio of 10:1 and of a pH value of 0.2. The extracting rate of scandium was up to 96.53%. The extracting rates of scandium and other metals from the second leachate are listed in Table 6.

**Table 6 Extracting rates of scandium and other metals from the second leachate**

| Extracting rates (%) | | | | | |
|---|---|---|---|---|---|
| Al | Ca | Fe | Mn | Ni | Sc |
| 0.5 | 3.40 | 1.28 | 2.41 | 1.34 | 96.53 |

It can be seen from that scandium is of a higher extracting rate than other metals (as impurities), thereby to scandium can be separated from the impurities. A small amount of Fe, Ni and Co extracted were washed off from the loaded organic phase, while Sc was reserved in the organic phase by means of performing 4-stage washing with 5% sulfuric acid at an aqueous phase/organic phase ratio of 2:1. Therefore, scandium was separated from impurities and enriched into the organic phase.

A strip liquor containing scandium was obtained by adding M HCl into the scandium-containing organic phase after purified at an aqueous phase/organic phase ratio of 1:3 for 3-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered, thereby scandium oxide with a purity of 99.9% was obtained.

### Example 5

The second leachate, of which contents of main elements are listed in Table 1, was adjusted to be of a pH value of 3.0, and then added with a kerosene solution containing 15% (v/v) carboxylic acid extractant CA12 (2-octylphenoxy acetic acid) at an aqueous phase/organic phase ratio of 5:1 for 10-stage extraction. Scandium was of an extraction percentage of 95.5 %, Fe was of an extraction percentage of 37.5%, Ni and Co were of extraction percentages close to 0%, Mn was of an extraction percentage of 0.2%, and Mg was of an extraction percentage of 0.5%. A small amount of Fe, Ni, Co, Mn and Mg extracted were washed off from the loaded organic phase, while Sc was reserved in the organic phase by means of performing 20-stage washing with 0.02 mol/L sulfuric acid at an aqueous phase/organic phase ratio of 1:1. Therefore, scandium was separated from impurities and enriched into the organic phase. A strip liquor containing scandium was obtained by adding 0.2M HCl into the scandium-containing organic phase after purified at an aqueous phase/organic phase ratio of 1:5 for 10-stage back-extraction.

The strip liquor containing scandium was added with 2.5 mol/L of oxalic acid to precipitate scandium as scandium oxalate. The precipitate was calcined for 4 hours at a temperature of 750 degrees Celsius after filtered; thereby scandium oxide with a purity of 99.8% was obtained.

### Example 6

The Ni-Co hydroxide precipitate, of which contents of main elements are listed in Table 2, was subjected to third leaching by adding 10% (mass ratio) sulfuric acid solution therein at a solid-to-liquid ratio (S: L) of 1:10, so as to third leachate after stirring and reacting for 3 hours. The third leachate mainly contained Ni, Co, Mn, Sc, Fe, Al and Ca. The third leachate was adjusted to be of a pH value of 4.8 at a temperature of 70 degrees Celsius, so as to obtain a second Fe-Al slag after filtering. The contents of main components in the second Fe-Al slag were analyzed shown in Table 7.

**Table 7 Contents of main elements in the second Fe-Al slag**

| Contents of main elements in the Fe-Al slag (%) | | | | | | | | | | |
|---|---|---|---|---|---|---|---|---|---|---|
| Sc | Ni | Co | Fe | Mn | Al | Ca | Si | Mg | Ca | Pb |
| 1.14 | 12.53 | 0.9 | 2.36 | 0.69 | 0.98 | 0.043 | 14.69 | 0.039 | 0.043 | <0.005 |

The Fe-Al slag was of a scandium content of 1.14%, as about 15 times as compared with that in the Ni-Co hydroxide precipitate, and as about 345 times as compared with that in the laterite-nickel ore. The second Fe-Al slag was subjected to leaching with 10% (mass percentage) sulfuric acid at a solid-to-liquid ratio (S:L) of 1:10, so as to obtain leachate after stirring and reacting for 2 hours and filtering.

The obtained leachate was adjusted to be of a pH value of 0.5, and then added with a kerosene solution containing 10% N235 (3-octyl tertiary amine) and 5% N503 (N,N 2-(1- heptyl methyl) acetamide) at an aqueous phase/organic phase ratio of 5:1 for 10-stage extraction. Scandium was of an extraction percentage of 99.8 %, Ni, Co, Fe and Al were of extraction percentages of 0.15%, 0.2%, 5.0% and 0.2%, respectively. A small amount of Fe, Ni and Co extracted were washed off from the loaded organic phase, while Sc was reserved in the organic phase by means of performing 5-stage washing with 5% sulfuric acid at an aqueous phase/organic phase ratio of 2:1. Therefore, scandium was separated from impurities and enriched into the organic phase. A strip liquor containing scandium was obtained by adding 0.2M HCl into the scandium-containing organic phase after purified at an aqueous phase/organic phase ratio of 1:1 for 2-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered; thereby scandium oxide with a purity of 99.9% was obtained.

After filtering out the second Fe-Al slag, the purified solution containing nickel and cobalt without iron and Si was refined by hydrometallurgical procedures (such as extraction and separation with a solvent and electrolysis), so as to obtain metals like nickel and cobalt.

### Example 7

The contents of main elements of second Fe-Al slag are listed in Table 7. The Ni-Co hydroxide precipitate was subjected to third leaching by adding 10% (mass ratio) sulfuric acid therein at a solid-to-liquid ratio (S: L) of 1:10, so as to third leachate after stirring and reacting for 3 hours. The third leachate mainly contained Ni, Co, Mn, Sc, Fe, Al and Ca. The third leachate was adjusted to be of a pH value of 5.5 at a temperature of 70 degrees Celsius, so as to obtain a second Fe-Al slag after filtering.

The second Fe-Al slag was subjected to leaching with 10% (mass percentage) sulfuric acid at a solid-to-liquid ratio (S:L) of 1:10, so as to obtain leachate after stirring and reacting for 2 hours and filtering.

The obtained leachate was adjusted to be of a pH value of 0.5, and then added with a kerosene solution containing 10% P204 (bis-(2-ethylhexyl) phosphoric acid) at an aqueous phase/organic phase ratio of 5:1 for extraction. Scandium was of an extraction percentage of 99.8 %, Ni, Co, Fe and Al were of extraction percentages of 0.1%, 0.15%, 0.8% and 0%, respectively. A small amount of Fe, Ni and Co extracted were washed off from the loaded organic phase, while Sc was reserved in the organic phase by means of performing 5-stage washing with 5% sulfuric acid at an aqueous phase/organic phase ratio of 5:1. Therefore, scandium was separated from impurities and enriched into the organic phase. A strip liquor containing scandium was obtained by adding 1M HCl into the scandium-containing organic phase after purified at an aqueous phase/organic phase ratio of 1:5 for 10-stage back-extraction.

The strip liquor containing scandium was added with 2 mol/L of oxalic acid to precipitate scandium as scandium oxalate. The precipitate was calcined for 1 hour at a temperature of 850 degrees Celsius after filtered; thereby scandium oxide with a purity of 99.9% was obtained.

### Example 8

The contents of elements in a laterite-nickel ore are listed in Table 1. The contents of Fe, Al, Mg, Ni, Mn, Ca and Sc are 41.9%, 1.83%, 1.98%, 1.07%, 0.65%, 0.18% and 0.0033%, respectively. The laterite-nickel ore was subjected to first leaching with a sulfuric acid at a high temperature, so as to obtain first leachate, of which contents of main elements are shown in Table 1.

The first leachate was adjusted to be of a pH value of 3.5, and then added with a kerosene solution containing 5% (v/v) carboxylic acid extractant CA12 (2-octylphenoxy acetic acid) at an aqueous phase/organic phase ratio of 5:1 for 5-stage extraction. Scandium was of an extraction percentage of 98.5 %, Fe was of an extraction percentage of 25%, Ni and Co were of extraction percentages close to 0, Mn was of an extraction percentage of 0.15%, and Mg was of an extraction percentage of 0.46%. A small amount of Fe, Ni, Co, Mn and Mg extracted were washed off from the loaded organic phase, while Sc was reserved in the organic phase by means of performing 15-stage washing with 0.01 M sulfuric acid at an aqueous phase/organic phase ratio of 1:2. Therefore, scandium was separated from impurities and enriched into the organic phase. A strip liquor containing scandium was obtained by adding 0.5M HCl into the scandium-containing organic phase after purified at an aqueous phase/organic phase ratio of 1:10 for 5-stage back-extraction.

The strip liquor containing scandium was added with 1 mol/L of oxalic acid to precipitate scandium as scandium oxalate. The precipitate was calcined for 4 hours at a temperature of 750 degrees Celsius after filtered; thereby scandium oxide with a purity of 99.8% was obtained.

Raffinate obtained after the step of extracting scandium was a purified solution containing nickel and cobalt without scandium, which can be used for producing metals of nickel and cobalt by extraction and separation with a solvent, electrolysis or other refining method.

### Example 9

2.0 L of the first leachate (shown as Table 1) was adjusted to be of a pH value of 0.2, and then added with 200 mL of kerosene solution containing 53% P204(bis-(2-ethylhexyl) phosphoric acid)-1%TBP (tributyl phosphate) for 10 min of extraction by mixing and stirring. Scandium was of an extraction percentage of 99.5 %, Ca, Mg, Mn, Ni, Fe and Al were of extraction percentages lower than 10%. The extracting rates of elements from the first leachate are listed in Table 8.

**Table 8 Extracting rates of elements from the first leachate**

| Extracting rates % | | | | | | |
|---|---|---|---|---|---|---|
| Fe | Al | Ni | Ca | Mg | Mn | Sc |
| 6.15 | 9.05 | 1.03 | 0 | 2.07 | 3.70 | 99.5 |

A small amount of Fe, Al, Ni, Ca, Mg and Mn extracted were washed off from the loaded organic phase, while Sc was reserved in the organic phase by means of performing 2-stage washing with 0.1 M sulfuric acid at an aqueous phase/organic phase ratio of 1:1. Therefore, scandium was separated from impurities and enriched into the organic phase. A strip liquor containing scandium was obtained by adding 1M HCl into the scandium-containing organic phase after purified at an aqueous phase/organic phase ratio of 1:10 for 10-stage back-extraction.

The strip liquor containing scandium was added with 3 mol/L of oxalic acid to precipitate scandium as scandium oxalate. The precipitate was calcined for 1 hour at a temperature of 800 degrees Celsius after filtered; thereby scandium oxide with a purity of 99.8% was obtained.

### Example 10

2.0 L of the first leachate containing 3.3mg/L Sc, 0.26g/L Fe, 0.15g/L Ca, 1.45g/L Mg, 0.81g/L Mn, 1.24g/L Ni and 0.12 g/L Co was added with 100mL of a sulfonated kerosene organic solution containing 5% N235 (3-octyl tertiary amine) and 1% N503 (N,N 2-(1-heptyl methyl) acetamide) for 2 min of extraction by mixing and stirring. Scandium was of an extraction percentage of 98.0%, Fe, Al, Ca, Mg, Mn, Ni and Co were of extraction percentages of 8.5%, 3.2%, 1.2%, 1.0%, 0.2%, 0.1% and 0.15%, respectively

A small amount of Fe, Al, Ca, Mg, Mn, Ni and Co extracted were washed off from the loaded organic phase, while Sc was reserved in the organic phase by means of performing 5-stage washing with 0.2 M sulfuric acid at an aqueous phase/organic phase ratio of 1:1. Therefore, scandium was separated from impurities and enriched into the organic phase.

A strip liquor containing scandium was obtained by adding 0.5M HCl into the scandium-containing organic phase after purified at an aqueous phase/organic phase ratio of 1:2 for 2-stage back-extraction.

The strip liquor containing scandium was added with 3 mol/L of oxalic acid to precipitate scandium as scandium oxalate. The precipitate was calcined for 1 hour at a temperature of 800 degrees Celsius after filtered; thereby scandium oxide with a purity of 99.9% was obtained.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure.

## Claims

1. A method for processing a laterite-nickel ore, comprising steps of:
subjecting the laterite-nickel ore to first leaching with sulfuric acid, so as to obtain a first leachate;
subjecting the first leachate to iron-aluminum (Fe-Al) precipitation and nickel-cobalt (Ni-Co) precipitation, so as to obtain a Fe-Al slag and a Ni-Co hydroxide precipitate;
recycling nickel and cobalt from the Ni-Co hydroxide precipitate;
recycling scandium from the Fe-Al slag,
wherein the step of recycling scandium from the Fe-Al slag comprises:
subjecting the Fe-Al slag to second leaching with sulfuric acid, so as to obtain a second leachate containing iron, aluminum and scandium;
extracting scandium from the second leachate with an organic extractant, so as to obtain a scandium-containing organic phase;
subjecting the scandium-containing organic phase to back-extraction with a monovalent acid, so as to obtain a strip liquor;
mixing the strip liquor with a precipitant, so as to obtain a scandium-containing precipitate; and
calcining the scandium-containing precipitate, so as to obtain scandium oxide.

2. The method according to claim 1, wherein the organic extractant is at least one selected from an organic phosphoric acid extractant, a neutral phosphorus extractant, an organic carboxylic acid extractant, an organic amine extractant and an organic chelate extractant.

3. The method according to claim 2, wherein the organic phosphoric acid extractant is at least one of bis(2-ethylhexyl) phosphoric acid (P204) and bis(2,4,4-trimethyl pentyl) phosphinic acid (Cyanex272); the neutral phosphorus extractant is tributyl phosphate (TBP); the organic carboxylic acid extractant is at least one selected from naphthenic acid or 2-octylphenoxy acetic acid (CA12); the organic amine extractant is 3-octyl tertiary amine (N235); and the organic chelate extractant is N,N-bis(1-heptyl methyl) acetamide (N503).

4. The method according to claim 1, wherein the monovalent acid is hydrochloric acid or nitric acid.

5. The method according to claim 1, wherein the monovalent acid is of a concentration of 0.01 mol/L to 5 mol/L.

6. The method according to claim 1, wherein the precipitant is at least one selected from sodium hydroxide, ammonium hydroxide, sodium carbonate, sodium bicarbonate and oxalic acid; and the precipitant is of a concentration of 0.1 mol/L to 5 mol/L.

7. The method according to claim 1, wherein the scandium-containing precipitate is calcined for 1 h to 6 h at a temperature of 700 degrees Celsius to 900 degrees Celsius.

## Patentansprüche

1. Ein Verfahren zum Aufarbeiten eines Laterit-Nickel-Erzes, umfassend die Schritte:
Unterwerfung des Laterit-Nickel Erzes einem ersten Auslaugen mit Schwefelsäure, um ein erstes Auslaugungsprodukt zu erhalten;
Unterwerfung des ersten Auslaugungsprodukts einer Eisen-Aluminium (Fe-Al) Ausfällung und einer Nickel-Cobalt (Ni-Co) Ausfällung, um eine Fe-Al Schlacke und eine Ni-Co Hydroxid Ausfällung zu erhalten;
Rückgewinnung von Nickel und Cobalt aus der Ni-Co Hydroxid Ausfällung;
Rückgewinnung von Scandium aus der Fe-Al Schlacke,
wobei der Schritt der Rückgewinnung von Scandium aus der Fe-Al Schlacke umfasst:
Unterwerfung der Fe-Al Schlacke einem zweiten Auslaugen mit Schwefelsäure, um ein zweites Auslaugungsprodukt zu erhalten, das Eisen, Aluminium und Scandium enthält;
Extrahieren des Scandiums aus dem zweiten Auslaugungsprodukt mit einem organischen Extraktionsmittel, um eine Scandium enthaltende organische Phase zu erhalten;
Unterwerfung der Scandium enthaltenden organischen Phase einer Rückextraktion mit einer monovalenten Säure, um eine Extraktionslauge zu erhalten;
Mischen der Extraktionslauge mit einem Fällungsmittel, um eine Scandium enthaltende Ausfällung zu erhalten; und
Kalzinieren der Scandium enthaltenden Ausfällung, um Scandiumoxid zu erhalten.

2. Das Verfahren gemäß Anspruch 1, wobei das organische Extraktionsmittel mindestens eines ausgewählt aus einem organischen Phosphorsäure-Extraktionsmittel, einem neutralen Phosphor-Extraktionsmittel, einem organischen Carbonsäure-Extraktionsmittel, einem organischen Amin-Extraktionsmittel und einem organischen Chelat-Extraktionsmittel ist.

3. Das Verfahren gemäß Anspruch 2, wobei das organische Phosphorsäure-Extraktionsmittel mindestens eines ist aus Bis-(2-Ethyl-hexyl)-Phosphorsäure (P204) und Bis-(2,4,4-Trimethyl-pentyl)-Phosphinsäure (Cyanex272); das neutrale Phosphor-Extraktionsmittel Tributyl-phosphat (TBP) ist; das organische Carbonsäure-Extraktionsmittel mindestens eines ist ausgewählt aus Naphthensäure oder 2-Octylphenoxy-Essigsäure (CA12); das organische Amin-Extraktionsmittel 3-Octyl Tertiäres Amin (N235) ist; und das organische Chelat-Extraktionsmittel N,N-Bis-(1-Heptyl-methyl)-Acetamid (N503) ist.

4. Das Verfahren gemäß Anspruch 1, wobei die monovalente Säure Salzsäure oder Salpetersäure ist.

5. Das Verfahren gemäß Anspruch 1, wobei die monovalente Säure eine Konzentration von 0,01 mol/L bis 5 mol/L hat.

6. Das Verfahren gemäß Anspruch 1, wobei das Fällungsmittel mindestens eines ist ausgewählt aus Natriumhydroxid, Ammoniumhydroxid, Natriumcarbonat, Natriumhydrogencarbonat und Oxalsäure; und das Fällungsmittel eine Konzentration von 0,1 mol/L bis 5 mol/L hat.

7. Das Verfahren gemäß Anspruch 1, wobei die Scandium enthaltende Ausfällung für 1 h bis 6 h bei einer Temperatur von 700 Grad Celsius bis 900 Grad Celsius kalziniert wird.

## Revendications

1. Procédé pour traiter un minerai de latérite-nickel, comprenant les étapes de :
soumission du minerai de latérite-nickel a une première lixiviation avec de l'acide sulfurique, de façon que soit obtenu un premier lixiviat ;
soumission du premier lixiviat à une précipitation de fer-aluminium (Fe-Al) et une précipitation de nickel-cobalt (Ni-Co), de façon que soient obtenus un laitier de Fe-Al et un précipité d'hydroxyde de Ni-Co ;
recyclage du nickel et du cobalt à partir du précipité d'hydroxyde de Ni-Co ;
recyclage du scandium à partir du laitier de Fe-Al,
dans lequel l'étape de recyclage du scandium à partir du laitier de Fe-Al comprend :
la soumission du laitier de Fe-Al à une deuxième lixiviation avec de l'acide sulfurique, de façon que soit obtenu un deuxième lixiviat contenant du fer, de l'aluminium et du scandium ;
l'extraction de scandium à partir du deuxième lixiviat avec un agent d'extraction organique, de façon que soit obtenue une phase organique contenant du scandium ;
la soumission de la phase organique contenant du scandium à une contre-extraction avec un acide monovalent, de façon que soit obtenue une liqueur d'extraction ;
le mélange de la liqueur d'extraction avec un agent de précipitation, de façon que soit obtenu un précipité contenant du scandium ; et
la calcination du précipité contenant du scandium, de façon que soit obtenu de l'oxyde de scandium.

2. Procédé selon la revendication 1, dans lequel l'agent d'extraction organique est au moins l'un choisi parmi un agent d'extraction acide phosphorique organique, un agent d'extraction phosphoré neutre, un agent d'extraction acide carboxylique organique, un agent d'extraction amine organique, et un agent d'extraction chélate organique.

3. Procédé selon la revendication 2, dans lequel l'agent d'extraction acide phosphorique organique est au moins l'un parmi l'acide bis(2-éthylhexyl)phosphorique (P204) et l'acide bis(2,4,4-triméthylpentyl)phosphinique (Cyanex272) ; l'agent d'extraction phosphoré neutre est le phosphate de tributyle (TBP) ; l'agent d'extraction acide carboxylique organique est au moins l'un choisi parmi l'acide naphténique et l'acide 2-octylphénoxyacétique (CA12) ; l'agent d'extraction amine organique est la 3-octylamine tertiaire (N235) ; et l'agent d'extraction chélate organique est le N,N-bis(1-heptylméthyl)acétamide (N503).

4. Procédé selon la revendication 1, dans lequel l'acide monovalent est l'acide chlorhydrique ou l'acide nitrique.

5. Procédé selon la revendication 1, dans lequel l'acide monovalent est présent à une concentration de 0,01 mol/l à 5 mol/l.

6. Procédé selon la revendication 1, dans lequel l'agent de précipitation est au moins l'un choisi parmi l'hydroxyde de sodium, l'hydroxyde d'ammonium, le carbonate de sodium, le bicarbonate de sodium et l'acide oxalique ; et l'agent de précipitation est présent à une concentration de 0,1 mol/l à 5 mol/l.

7. Procédé selon la revendication 1, dans lequel le précipité contenant du scandium est calciné pendant 1 heure à 6 heures à une température de 700°C à 900°C.
